Europäisches Patentamt

European Patent Office

Office européen des brevets

(19)

(11) Veröffentlichungsnummer: **0 135 817 B1**

(12) **EUROPÄISCHE PATENTSCHRIFT**

(45) Veröffentlichungstag der Patentschrift: 20.03.91

(51) Int. Cl.⁵: **A23G 1/00**

(21) Anmeldenummer: **84110093.6**

(22) Anmeldetag: **24.08.84**

(54) **Kakaohaltige Getränkepulver.**

(30) Priorität: **17.09.83 DE 3333676**

(43) Veröffentlichungstag der Anmeldung:
**03.04.85 Patentblatt 85/14**

(45) Bekanntmachung des Hinweises auf die
Patenterteilung:
**20.03.91 Patentblatt 91/12**

(84) Benannte Vertragsstaaten:
**AT BE CH DE FR GB IT LI LU NL SE**

(56) Entgegenhaltungen:
**DE-A- 1 806 816      DE-C- 845 008**
**FR-A- 481 294        FR-A- 2 328 411**
**GB-A- 407 044        US-A- 2 336 254**

**A.FINCKE et al.: "Handbuch der Kakaoerzeugnisse", Seiten 110,111, 2. Auflage,
Springer-Verlag, Berlin, DE**

**CONFECTIONERY PRODUCTION, November
1983, Seiten 573,574; H.R.RIEDEL: "Brazilian
chocolate in 1983"**

(73) Patentinhaber: **Krüger GmbH & Co. KG**
**Meisenweg 2 Postfach 20 05 29**
**W-5060 Bergisch Gladbach 2(DE)**

(72) Erfinder: **Krüger, Willibert**
**Meisenweg 2**
**W-5060 Bergisch Gladbach 2(DE)**

(74) Vertreter: **Werner, Hans-Karsten, Dr. et al**
**Deichmannhaus am Hauptbahnhof**
**W-5000 Köln 1(DE)**

**Beschreibung**

Kakaohaltige Getränkepulver enthalten im allgemeinen 9 bis 33 Gew.-% Kakaopulver und 40 bis 80 Gew.-% Zucker, ggf. Milchpulver, Geschmacks- und Aromastoffe, Vitamine und Mineralstoffe. Das Kakaopulver wird hierzu in handelsüblichen Formen verwendet, d.h. in schwach entölter oder stark entölter Form. Stark entölte Kakaopulver enthalten im allgemeinen zwischen 8 und 20 Gew.-% Kakaobutter, während schwach entölte Kakaopulver über 20% Kakaobutter enthalten. Gewünschtenfalls kann das Kakaopulver auch mit Lecithin versetzt sein. Als Zucker werden Saccharose und/oder Glucose verwendet. Als Milchpulver werden übliche Magermilchpulver verwendet, denen gewünschtenfalls nachträglich künstliche Fette in Pulverform zugemischt sein können. Als Geschmacks- und Aromastoffe können beispielsweise Vanillin und Zimt verwendet werden. Mineralstoffe können in den Ausgangsmaterialien enthalten sein oder in Form von Natriumchlorid und anderen Mineralstoffen zugesetzt werden.

Die GB-A-407044 beschreibt die Herstellung von Bonbons, deren Hauptbestandteil Schokolade sowie Fruchtsirup, Aromastoffe oder Pfefferminzessenz sind. Aufgabe der Erfindung ist die Bereitstellung eines Verfahrens zur besseren Verteilung der Aromastoffe in den Bonbons.

Die FR-A-481294 beschreibt ein Verfahren Tafelschokolade herzustellen, die verschiedene Mengen an Pfefferminzessenz enthält.

Gegebenenfalls sind kakaohaltige Getränkepulver auch mit Vitaminen versetzt. Derartige kakaohaltige Getränkepulver erfreuen sich zwar einer gewissen Beliebtheit, jedoch ist der Geschmack der so erhaltenen Getränke so charakteristisch durch den Kakao geprägt, daß es von vielen Verbrauchern als zu breit und zu klebrig empfunden wird und deshalb nur in begrenztem Umfang akzeptiert wird.

Kakao ist weiterhin bereits in Form von sogenannten Pfefferminztalern oder in Form dünner Schokoladenplätzchen mit einer cremigen Innenfüllung mit Pfefferminzgeschmack verarbeitet worden. Hierbei handelt es sich jedoch um typische Süßigkeiten, die ebenfalls nur einen begrenzten Abnehmerkreis haben.

Die Erfindung hat sich die Aufgabe gestellt, ein kakaohaltiges Getränkepulver zu entwickeln, welches nicht mehr den für Kakao typischen breiten und etwas klebrigen Geschmack aufweist und daher breitere Verbraucherkreise ansprechen kann.

Es wurde überraschenderweise gefunden, daß bereits durch relativ geringe Mengen von Pfefferminzöl bzw. Pfefferminzextrakt der Geschmack von kalten Getränken auf Basis kakaohaltiger Getränkepulver dahingehend abgeändert werden kann, daß sie als erfrischend und angenehm empfunden werden.

Das erfindungsgemäße kakaohaltige Getränkepulver sowie die daraus hergestellten kalten Getränke sind neu und weisen eine überraschende geschmackliche Note auf, die bisher nicht bekannt war.

Während bei Pfefferminztalern und Schokoladenplätzchen mit pfefferminzhaltiger Cremefüllung der süße Geschmack und der Pfefferminzgeschmack überwiegen, weisen Kaltgetränke auf Basis des erfindungsgemäßen kakaohaltigen Getränkepulvers einen erfrischenden Geschmack auf. Hierbei dominiert noch immer der übliche Geschmack bisher bekannter kakaohaltiger Getränkepulver, jedoch wird dieser Geschmack durch den Zusatz von Pfefferminzöl bzw. Pfefferminzextrakt in relativ geringen Mengen derartig verändert, daß das Getränk jetzt als erfrischend empfunden wird.

Die optimale Menge an Pfefferminzöl bzw. Pfefferminzextrakt hängt bis zum gewissen Grade von der Menge und der Geschmacksintensität des Kakaopulvers ab. Bei einem kakaohaltigen Getränkepulver mit etwa 20 Gew.-% Kakaopulver haben sich Mengen von 0,1 Gew.-% Pfefferminzöl bzw. 1 Gew.-% Pfefferminzextrakt als ausreichend und besonders angenehm in der Geschmacksnote erwiesen.

Gegenstand der vorliegenden Erfindung ist somit kakaohaltiges Getränkepulver enthaltend 9 bis 33 Gew.-% Kakaopulver, 40 bis 80 Gew.-% Zucker, ggf. Milchpulver, Geschmacks- und Aromastoffe, Vitamine und Mineralstoffe, dadurch gekennzeichnet, daß als Aromastoff 0,05 bis 0,5 Gew.-% Pfefferminzöl oder 0,1 bis 5 Gew.-% Pfefferminzextrakt verwendet wird

Die Herstellung der erfindungsgemäßen kakaohaltigen Getränkepulver erfolgt in üblicher und an sich bekannter Weise durch Vermischen und/oder Agglomerieren der einzelnen Bestandteile.

In den nachfolgenden Beispielen sind typische Rezepturen zusammengestellt.

**Beispiel 1**

```
58,2 Gewichtsteile Saccharose,

20,0 Gewichtsteile Dextrose,

21,0 Gewichtsteile Kakaopulver (stark
     entölt,lecithiniert),

 0,3 Gewichtsteile Natriumchlorid,

 0,2 Gewichtsteile einer Vitaminmischung,

 0,2 Gewichtsteile Vanillin sowie

 0,1 Gewichtsteile Pfefferminzöl
```

werden gründlich miteinander vermischt und agglomeriert. Das so erhaltene Pulver ist in kalten Flüssigkeiten, insbesondere in kalter Milch gut löslich. Das so erhaltene Getränk schmeckt in einer Auflösung von 10 g in 90 g kalter Milch erfrischend und angenehm.

Zum Vergleich wird dieselbe Mischung ohne Zusatz von Pfefferminzöl hergestellt. Ein entsprechend zubereitetes Kaltgetränk schmeckt wie übliche Kakaogetränke, d.h. es weist den typischen breiten und etwas klebrigen Geschmack auf.

## Beispiel 2

Kakaohaltiges Getränkepulver wird in gleicher Weise wie in Beispiel 1 hergestellt, jedoch anstelle von 0,1 Gewichtsteil Pfefferminzöl wird 1 Gewichtsteil Pfefferminzextrakt zugesetzt.

Das so erhaltene Getränkepulver ergibt mit kalter Milch ebenfalls ein erfrischendes Kaltgetränk.

## Vergleichsversuch

Kakaohaltiges Getränkepulver wurde wie in Beispiel 1 hergestellt, jedoch wurden in einem Fall nur 0,01 Gewichtsteile Pfefferminzöl und im anderen Fall 1 Gewichtsteil Pfefferminzöl zugegeben. Der Geschmack der so erhaltenen Getränke war bei Zusatz von 0,01 Gewichtsteil Pfefferminzöl nahezu unverändert gegenüber dem kakaohaltigen Getränkepulver ohne Zusatz von Pfefferminzöl. Bei Zusatz von 0,5 Gewichtsteilen Pfefferminzöl dominierte der Pfefferminzgeschmack, so daß die Kakaokomponente unterdrückt wurde.

## Beispiel 3

```
44,3  Gewichtsteile Saccharose,

41,0  Gewichtsteile Magermilchpulver,

14,0  Gewichtsteile Kakaopulver (stark entölt),

 0,43 Gewichtsteile Natriumchlorid und
      Mineralsalze,

 0,2  Gewichtsteile Vanillin sowie

 0,07 Gewichtsteile Pfefferminzöl
```

werden gründlich miteinander vermischt und agglomeriert. Das so erhaltene Pulver ist in warmen und kaltem Wasser gut löslich. Die so erhaltenen Getränke schmecken in einer Auflösung von 10 g in 70 g Wasser erfrischend und angenehm.

Der angenehme und erfrischende Geschmack bleibt auch erhalten, wenn das Pulver mit mehr oder weniger Wasser angerührt wird.

**Ansprüche**

1. Kakaohaltiges Getränkepulver enthaltend 9 bis 33 Gew.-% Kakaopulver, 40 bis 80 Gew.-% Zucker, ggf. Milchpulver, Geschmacks- und Aromastoffe, Vitamine und Mineralstoffe, dadurch gekennzeichnet, daß als Aromastoff zusätzlich 0,05 bis 0,5 Gew.-% Pfefferminzöl oder 0,1 bis 5 Gew.-% Pfefferminzextrakt verwendet wird.

**Claims**

1. A cocoa-containing beverage powder containing from 9 to 33% by weight of cocoa powder, from 40 to 80% by weight of sugar, optionally milk powder, flavor and aroma substances, vitamins and mineral substances, characterized in that from 0.05 to 0.5% by weight of peppermint oil or from 0.1 to 5% by weight of peppermint extract are additionally used as the aroma substance.

**Revendications**

1. Poudre pour boissons contenant du cacao, contenant de 9 à 33 % en poids de poudre de cacao, de 40 à 80 % en poids de sucre, éventuellement du lait en poudre, des arômes naturels et artificiels, des vitamines et des substances minérales, caractérisée en ce qu'on utilise en outre, comme arôme, de 0,05 à 0,5 % en poids d'essence de menthe poivrée ou de 0,1 à 5 % en poids d'extrait de menthe poivrée.